# EUROPÄISCHE PATENTSCHRIFT

(11) **EP 3 416 764 B1**
(45) Veröffentlichungstag und Bekanntmachung des Hinweises auf die Patenterteilung: **11.12.2019**
(21) Anmeldenummer: 17713875.7
(22) Anmeldetag: 15.02.2017
(51) Int. Cl.: B21D 5/02, B21D 37/14

(54) **WERKZEUGWECHSELVORRICHTUNG FÜR EINE ABKANTPRESSE UND VERFAHREN ZUM DURCHFÜHREN EINES WERKZEUGWECHSELS**
TOOL CHANGING DEVICE FOR A PRESS BRAKE METHOD FOR CHANGING A TOOL
DISPOSITIF DE CHANGEMENT D'OUTIL POUR PRESSE PLIEUSE ET PROCÉDÉ PERMETTANT DE RÉALISER UN CHANGEMENT D'OUTIL

(30) Priorität: 17.02.2016 AT 501002016
(43) Veröffentlichungstag der Anmeldung: 26.12.2018
(73) Patentinhaber: TRUMPF Maschinen Austria GmbH & Co. KG., 4061 Pasching (AT)
(72) Erfinder: CAVICCHIA, Luigi, 10028 Trofarello (TO (IT); TOMASIN, Fabio, 10098 Rivoli (TO) (IT); TONDA ROCH, Andrea, 10141 Torino (IT); VERONESE, Roberto, 10023 Chieri (TO) (IT); VIDOTTO, Giovanni, 10023 Chieri (TO) (IT)
(74) Vertreter: Burger, Hannes
(86) Internationale Anmeldenummer: PCT/AT2017/060032
(87) Internationale Veröffentlichungsnummer: WO 2017/139824

(56) Entgegenhaltungen:
- EP-A1- 1 658 908
- EP-A1- 2 893 987
- AT-B1- 511 078
- CH-A5- 668 035
- JP-A- H07 275 941

## Beschreibung

Die Erfindung betrifft eine Werkzeugwechselvorrichtung für eine Abkantpresse.

Aus der AT 511 078 B1 ist ein Werkzeugwechselsystem bekannt, wobei der Werkzeugwechsel mit dem Hinteranschlag durchgeführt wird.

Der Werkzeugwechsel mittels dem Hinteranschlag benötigt einen hohen Zeitaufwand.

Die EP 1 658 908 A1 offenbart eine Werkzeugwechselvorrichtung für eine Abkantpresse. Die Werkzeugwechselvorrichtung umfasst einen Werkzeugträger, welcher mittels einer Manipulationsvorrichtung in die Abkantpresse eingewechselt werden kann.

Der vorliegenden Erfindung liegt die Aufgabe zugrunde, ein verbessertes Werkzeugwechselsystem zu schaffen, mit dem der Werkzeugwechsel möglichst schnell und effizient durchgeführt werden kann.

Diese Aufgabe der Erfindung wird durch die Merkmale gemäß Anspruch 1 gelöst. Weiters ist in Anspruch 13 ein Verfahren zum Durchführen eines Werkzeugwechsels an einer Abkantpresse angegeben.

Erfindungsgemäß ist eine Werkzeugwechselvorrichtung für eine Abkantpresse ausgebildet. Die Werkzeugwechselvorrichtung umfasst einen Werkzeugträger, welcher zur Aufnahme von Biegewerkzeugen eine Aufnahmevertiefung aufweist, wobei die Biegewerkzeuge zwischen dem Werkzeugträger und einer in einem Pressbalken der Abkantpresse ausgebildeten Werkzeugaufnahme verschiebbar sind; eine Manipulationsvorrichtung zum Manipulieren des Werkzeugträgers zwischen einer Werkzeugwechselposition, in welcher der Werkzeugträger neben der Werkzeugaufnahme angeordnet ist um die Biegewerkzeuge vom Werkzeugträger in die Werkzeugaufnahme verschieben zu können, und einer Werkzeugbestückungsposition, in welcher der Werkzeugträger im Bereich eines Werkzeugspeichers zum Bestücken mit Biegewerkzeugen angeordnet ist. Die Manipulationsvorrichtung weist einen ersten Manipulationsarm und einen zweiten Manipulationsarm auf, wobei am ersten Manipulationsarm eine erste Koppelvorrichtung und am zweiten Manipulationsarm eine zweite Koppelvorrichtung zur Aufnahme des Werkzeugträgers ausgebildet sind.

Von Vorteil an der erfindungsgemäßen Ausbildung ist, dass die Biegewerkzeuge im Werkzeugträger vorgerüstet werden können und der Werkzeugträger anschließend mittels der Manipulationsvorrichtung von der Werkzeugwechselposition in die Werkzeugbestückungsposition bewegt werden kann. Durch die beiden Manipulationsarme der Manipulationsvorrichtung können zwei der Werkzeugträger von der Manipulationsvorrichtung aufgenommen werden, wodurch es möglich ist, dass von der Manipulationsvorrichtung in einem Arbeitsschritt ein sich in der Werkzeugwechselposition befindlicher Werkzeugträger am ersten Manipulationsarm der Manipulationsvorrichtung aufgenommen wird und am zweiten Manipulationsarm der Manipulationsvorrichtung bereits ein zweiter Werkzeugträger mit zu rüstenden Biegewerkzeugen vorbereitet ist, um ihn möglichst schnell in die Werkzeugwechselposition einsetzen zu können.

Weiters kann es zweckmäßig sein, wenn beide Manipulationsarme eine Linearverstellung aufweisen, mittels welchen die beiden Koppelvorrichtungen unabhängig voneinander in vertikaler Richtung verschiebbar sind. Von Vorteil ist hierbei, dass der Werkzeugträger durch diese Maßnahme in vertikaler Richtung in die Werkzeugwechselposition bzw. in die Werkzeugbestückungsposition eingesetzt werden kann. Insbesondere kann durch die voneinander unabhängige Verschiebung der Koppelvorrichtungen ein gezieltes bewegen der Werkzeugträger erreicht werden, um auch bei engen Bauverhältnissen den Werkzeugträger in die Werkzeugwechselposition bzw. in die Werkzeugbestückungsposition einsetzen zu können.

Ferner kann vorgesehen sein, dass zumindest einer der Manipulationsarme einen Führungsschlitten aufweist, an welchem die Koppelvorrichtung angeordnet ist, wobei der Führungsschlitten mit einer Antriebsvorrichtung, insbesondere einem Pneumatikzylinder, gekoppelt ist. Von Vorteil ist hierbei, dass die Koppelvorrichtung durch den Führungsschlitten Positionsgenau geführt werden kann.

Darüber hinaus kann vorgesehen sein, dass zumindest eine weitere Antriebsvorrichtung, insbesondere ein weiterer Pneumatikzylinder, ausgebildet ist, mittels welchem die Antriebsvorrichtung des Führungsschlittens verschiebbar ist, wodurch eine Teleskopfunktion ausgebildet ist. Vorteil ist hierbei, dass durch diese Maßnahme bei möglichst geringem Bauraum ein möglichst großer Verschiebeweg erreicht werden kann.

Vorteilhaft ist auch eine Ausprägung, gemäß welcher vorgesehen sein kann, dass beide Manipulationsarme an einer Manipulationsarmaufnahme angeordnet sind, wobei die Manipulationsarmaufnahme relativ zu einem Grundgestell der Manipulationsvorrichtung verdrehbar gelagert sind. Von Vorteil ist hierbei, dass durch eine Verdrehung der Werkzeugaufnahme um 180° die Orientierung der Biegewerkzeuge bzw. die Reihenfolge der Biegewerkzeuge in der Werkzeugaufnahme der Abkantpresse verändert werden kann.

Gemäß einer Weiterbildung ist es möglich, dass die Koppelvorrichtung ein erstes Betätigungselement und ein zweites Betätigungselement aufweist, welche mittels einem ersten Aktor und einem zweiten Aktor in horizontaler Richtung zwischen einer Ruhestellung und einer Betätigungsstellung verschiebbar sind, wodurch der Werkzeugträger freigebbar bzw. mit der Koppelvorrichtung arretierbar ist. Von Vorteil ist hierbei, dass durch diese Maßnahme der Werkzeugträger automatisiert an der Manipulationsvorrichtung aufgenommen werden kann.

Ferner kann es zweckmäßig sein, wenn am Werkzeugträger ein erstes Arretierelement und ein zweites Arretierelement ausgebildet sind, welche jeweils zumindest einen Arretierzapfen aufweisen, welcher zum Eingriff in eine in der Werkzeugwechselposition oder in der Werkzeugbestückungsposition angeordnete Zapfenaufnahme verschiebbar im Arretierelement gelagert sind, wobei die Arretierzapfen mittels der Betätigungselemente verschiebbar sind. Von Vorteil ist hierbei, dass der Werkstückträger mittels der Arretierelemente bzw. der Arretierzapfen in der Werkzeugwechselposition oder in der Werkzeugbestückungsposition aufgenommen werden kann.

Darüber hinaus kann vorgesehen sein, dass an den Arretierzapfen ein Mitnehmerzapfen ausgebildet ist, welcher in Richtung Betätigungselemente abstehend ausgebildet ist, und dass in den Betätigungselementen eine mit dem Mitnehmerzapfen korrespondierende Ausnehmung ausgebildet ist. Von Vorteil ist hierbei das durch den Mitnehmerzapfen bzw. die korrespondierende Ausnehmung in den Betätigungselementen eine koppelbare Verbindung zwischen Betätigungselemente und Arretierelementen geschaffen werden kann.

Weiters kann vorgesehen sein, dass im Betätigungselement eine schlitzförmige Ausnehmung ausgebildet ist, welche in einem Einführbereich eine Erweiterung aufweist, und dass am Werkzeugträger ein Haltezapfen angeordnet ist, welcher einen Fixtierkopf mit einer nutförmigen Ausnehmung aufweist, wobei eine Breite der schlitzförmigen Ausnehmung im Betätigungselement geringfügig größer ist als die Hauptabmessung des Nutgrundes der nutförmigen Ausnehmung und wobei die lichte Weite der Erweiterung geringfügig größer ist als eine Außenabmessung des Fixierkopfes des Haltezapfens. Dadurch kann das Betätigungselement gleichzeitig als Verriegelungselement, wobei der Haltezapfen des Werkzeugträgers in der Erweiterung des Betätigungselementes in dieses eingesetzt wird und durch Verschiebung des Betätigungselementes eine Verriegelung des Haltezapfens im Betätigungselement erreicht werden kann.

Gemäß einer besonderen Ausprägung ist es möglich, dass in der Aufnahmevertiefung ein Sicherungshaken ausgebildet ist, welcher um einen Drehpunkt schwenkbar am Werkzeugträger angeordnet ist, wobei der Sicherungshaken an einem ersten Hebelarm eine Sicherungsnase aufweist, welche in einer Sicherungsstellung als mechanischer Anschlag wirkt und somit das Verschieben der Biegewerkzeuge unterbindet, und der Sicherungshaken in einer Freigabestellung im Werkzeugträger versenkt ist, sodass die Biegewerkzeuge seitlich aus dem Werkzeugträger hinausgeschoben werden können, wobei der Sicherungshaken mittels einem Federelement in seine Freigabestellung gedrückt ist und mittels dem Betätigungselement in die Sicherungsstellung gedrückt werden kann. Von Vorteil ist hierbei, dass durch den Sicherungshaken ein herausfallen der Biegewerkzeuge aus dem Werkzeugträger bestmöglich vermieden werden kann. Dies kann insbesondere notwendig sein, wenn der Werkzeugträger während der Manipulation mit hohen Beschleunigungswerten beschleunigt bzw. abgebremst wird und dadurch die Biegewerkzeuge aus dem Werkzeugträger herausfallen würden.

Entsprechend einer vorteilhaften Weiterbildung kann vorgesehen sein, dass an einer Seite des Drehpunktes des Sicherungshakens der erste Hebelarm ausgebildet ist und dass an einer zweiten Seite des Drehpunktes ein zweiter Hebelarm ausgebildet ist, wobei das Federelement als Druckfeder ausgebildet ist, welche an einer Unterseite des zweiten Hebelarmes wirkt und dadurch der Sicherungshaken in seine Freigabestellung gedrückt ist und dass am Betätigungselement eine Betätigungsnase ausgebildet ist, welche auf den ersten Hebelarm des Sicherungshakens wirkt, wobei in der Betätigungsstellung des Betätigungselementes der Sicherungshaken in seine Freigabestellung gedrückt ist und in der Ruhestellung des Betätigungselementes der Sicherungshaken in seine Sicherungsstellung gedrückt ist. Von Vorteil ist hierbei, dass der Sicherungshaken gleichzeitig mit der Bewegung der Betätigungselemente aktiviert bzw. deaktiviert werden kann und dadurch kein eigener Antrieb zum verstellen des Sicherungshakens notwendig ist.

Beim Verfahren zum Durchführen eines Werkzeugwechsels an einer Abkantpresse ist vorgesehen, dass das Verfahren folgende Verfahrensschritte umfasst:
- Bereitstellen eines ersten Werkzeugträgers, welcher zur Aufnahme von Biegewerkzeugen ausgebildet ist, wobei der erste Werkzeugträger an einem ersten Manipulationsarm einer Manipulationsvorrichtung aufgenommen ist;
- Bestücken des ersten Werkzeugträgers mit im Werkzeugspeicher gelagerten Biegewerkzeugen;
- Bereitstellen eines zweiten Werkzeugträgers an der Werkzeugwechselposition, in welcher der Werkzeugträger neben der Werkzeugaufnahme angeordnet ist;
- Verschieben der in einer Werkzeugaufnahme der Abkantpresse aufgenommenen Biegewerkzeuge in den zweiten Werkzeugträger;
- Aufnehmen des zweiten Werkzeugträgers mittels einem zweiten Manipulationsarm der Manipulationsvorrichtung;
- Positionieren des ersten Werkzeugträgers in die Werkzeugwechselposition mittels dem ersten Manipulationsarm der Manipulationsvorrichtung;
- Ablegen des ersten Werkzeugträgers in der Werkzeugwechselposition;
- Transportieren des zweiten Werkzeugträgers in eine Werkzeugbestückungsposition, in welcher der Werkzeugträger im Bereich eines Werkzeugspeichers zum Bestücken mit Biegewerkzeugen angeordnet ist.

Dieses Verfahren weist den Vorteil auf, dass ein Werkzeugwechsel mit den aufgezeigten Verfahrensschritten schnell und einfach durchgeführt werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer Abkantpresse in einer Vorderansicht;
- Fig. 2: ein Ausführungsbeispiel einer Werkzeugwechselvorrichtung in einer ersten perspektivischen Ansicht;
- Fig. 3: die Werkzeugwechselvorrichtung nach Fig. 2 in einer weiteren perspektivischen Ansicht;
- Fig. 4: ein Ausführungsbeispiel eines Werkzeugträgers in einer Schnittdarstellung;
- Fig. 5: eine perspektivische Detailansicht des Werkzeugträgers nach Fig. 4 in Schnittdarstellung;
- Fig. 6: eine perspektivische Explosionsdarstellung einer Manipulationsvorrichtung und des Werkzeugträgers;
- Fig. 7: eine perspektivische Explosionsdarstellung der Manipulationsvorrichtung und des Werkzeugträgers in Schnittansicht;
- Fig. 8: eine Detailansicht einer Koppelvorrichtung mit Werkzeugträger und Manipulationsvorrichtung in geschnittener Darstellung;
- Fig. 9a-e: eine Abfolge von einzelnen Verfahrensschritten bei einem Werkzeugwechsel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

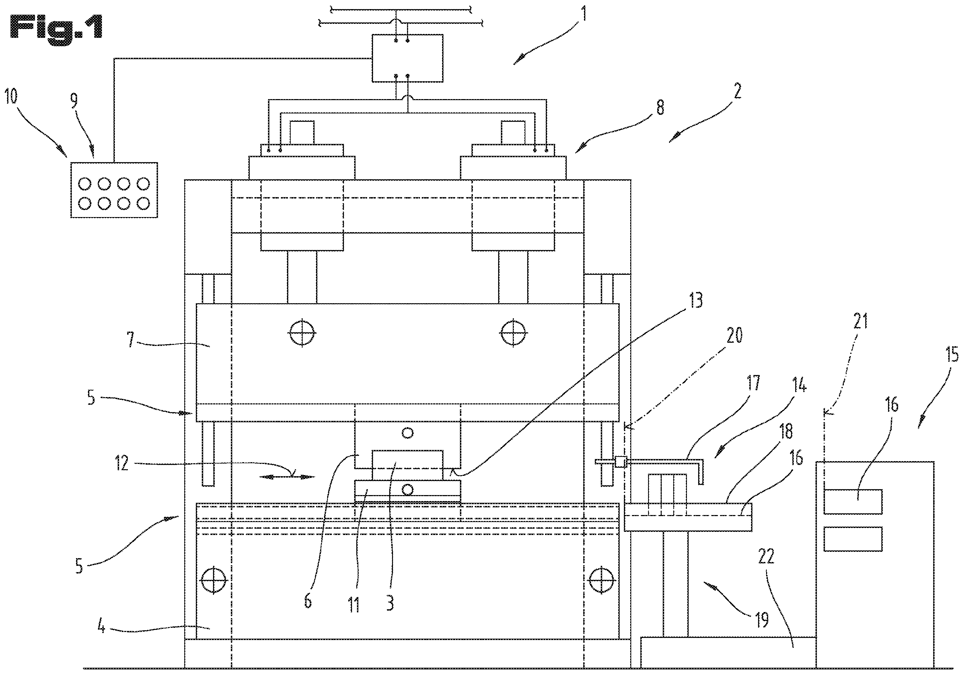

Fig. 1 zeigt in schematischer Darstellung die Vorderansicht einer Bearbeitungsanlage 1. Die Bearbeitungsanlage 1 umfasst eine Abkantpresse 2, welche zum Biegen eines Bleches 3 vorgesehen ist.

Die Abkantpresse 2 umfasst weiters einen ersten feststehenden Pressbalken 4, in welchem eine Werkzeugaufnahme 5 zur Aufnahme eines Biegewerkzeuges 6 ausgebildet ist. Weiters umfasst die Abkantpresse 2 einen zweiten verstellbaren Pressbalken 7 an welchem ebenfalls eine Werkzeugaufnahme 5 zur Aufnahme eines Biegewerkzeuges 6 ausgebildet ist.

Das zu biegende Blech 3 wird für den Biegevorgang zwischen den Biegewerkzeugen 6 des ersten 4 und des zweiten Pressbalken 7 eingelegt. Das im zweiten Pressbalken 7 befestigte Biegewerkzeug 6 respektive der zweite Pressbalken 7 wird durch eine Pressenantriebseinheit 8 in vertikaler Richtung nach oben bzw. nach unten bewegt. Zur Steuerung der Pressenantriebseinheit 8 ist eine Rechnereinheit 9 vorgesehen, an welche eine Eingabe- und/oder Anzeigeeinheit 10 gekoppelt sein kann.

Aus Fig. 1 ist weiters ersichtlich, dass das Biegewerkzeug 6 einen Werkzeugkörper 11 aufweist, welcher beim Biegevorgang das zu biegende Blech 3 verformt. Das Biegewerkzeug 6 kann in der Werkzeugaufnahme 5 in horizontaler Verschieberichtung 12 entlang des Klemmabschnittes der Werkzeugaufnahme 5 positioniert werden. Dazu kann das Biegewerkzeug 6 in der horizontalen Verschieberichtung 12 seitlich in die Werkzeugaufnahme 5 der Pressbalken 4 oder 7 eingeschoben werden.

In der Werkzeugaufnahme 5 können mehrere Biegewerkzeuge 6, welche gleichartig ausgebildet sind, nebeneinander positioniert werden und aneinander anschließen. Somit kann erreicht werden, dass Biegekanten 13 von einzelnen Biegewerkzeugen 6 eine entsprechend lange Bearbeitungskante bilden.

Eine weitere Möglichkeit zur Anordnung von Biegewerkzeugen 6 besteht darin, dass in der Werkzeugaufnahme 5 mehrere unterschiedliche Biegewerkzeuge 6 positioniert werden. Diese unterschiedlichen Biegewerkzeuge 6 werden dann für verschiedene Biegevorgänge verwendet und können auch individuell ausgetauscht werden. Werden Biegewerkzeuge 6 unterschiedlicher Art für unterschiedliche Arbeitsschritte verwendet, so ist es üblich, dass diese in einem gewissen Abstand zueinander angeordnet sind.

Um eine möglichst flexible Bearbeitungsanlage 1 zur Verfügung zu stellen, ist es notwendig, dass die Biegewerkzeuge 6 einfach und schnell in der Werkzeugaufnahme 5 gespannt und aus dieser wieder herausgenommen werden können. Dies kann mittels einer Werkzeugwechselvorrichtung 14 realisiert werden, welche wie in diesem Dokument geschrieben ausgebildet ist. Die Werkzeugwechselvorrichtung 14 kann sowohl zum Wechsel der Biegewerkzeuge 6 des feststehenden Pressbalkes 4 als auch der Biegewerkzeuge 6 des verstellbaren Pressbalkens 7 eingesetzt werden.

Die Werkzeugwechselvorrichtung 14 kann mit einem Werkzeugspeicher 15 gekoppelt sein, in welchem die Biegewerkzeuge 6 gelagert werden. Wie aus Figur 1 ersichtlich ist vorgesehen, dass die Werkzeugwechselvorrichtung 14 einen Werkzeugträger 16 aufweist, welcher zur Aufnahme von einem oder mehreren Biegewerkzeugen 6 ausgebildet ist. Zum Rüsten von Biegewerkzeuge 6 an der Abkantpresse 2 kann eine Einzugsvorrichtung 17 vorgesehen sein, mittels welcher mehrere Biegewerkzeuge 6 gleichzeitig vom Werkzeugträger 16 in die Werkzeugaufnahme 5 der beiden Pressbalken 4, 6 eingeschoben werden können. Durch diese Maßnahme können die Biegewerkzeuge 6 im Werkzeugträger 16 in der vorgesehenen Reihenfolge vorbereitet und angeordnet werden. Dadurch kann die tatsächliche Rüstzeit bei einem Werkzeugwechsel verkürzt werden und somit die Effizienz der Bearbeitungsanlage 1 verbessert werden. Im Werkzeugträger 16 kann hierbei eine Aufnahmevertiefung 18 vorgesehen sein in welcher die Biegewerkzeuge 6 aufgenommen bzw. eingesetzt werden können.

Insbesondere kann vorgesehen sein, dass zum Entfernen mehrerer Biegewerkzeuge 6 aus der Bearbeitungsanlage 1 diese in einen vorbereiteten Werkzeugträger 16 verschoben werden. Der Werkzeugträger 16 kann anschließend mittels einer Manipulationsvorrichtung 19 der Werkzeugwechselvorrichtung 14 in den Werkzeugspeicher 15 transportiert und dort gelagert oder auch entleert und mit neuen Biegewerkzeugen 6 bestückt werden. In einem weiteren Verfahrensschritt kann vorgesehen sein, dass ein weiterer Werkzeugträger 16 mit für weitere Bearbeitungsschritte notwendigen Biegewerkzeuge 6 vorbereitet wird. Diese weitere Werkzeugträger 16 kann anschließend neben der Werkzeugaufnahme 5 der Abkantpresse 2 platziert werden, um anschließend die darauf angeordneten Biegewerkzeuge 6 in die Werkzeugaufnahme 5 verschieben zu können.

Der Vollständigkeit halber wird darauf hingewiesen, dass in den Ausführungsbeispielen eine Werkzeugwechselvorrichtung 14 zum Wechsel der Biegewerkzeuge 6 des ersten Pressbalkens 4 dargestellt und beschrieben ist. Es wird jedoch darauf hingewiesen, dass eine Werkzeugwechselvorrichtung 14 zum Wechsel der Biegewerkzeuge 6 des zweiten Pressbalkens 7 analog zu dieser aufgebaut sein kann und natürlich auch in der Erfindung abgedeckt ist.

Wie aus Figur 1 weiters ersichtlich, kann der Werkzeugträger 16 mittels der Manipulationsvorrichtung 19 zwischen einer Werkzeugwechselposition 20 und einer Werkzeugbestückungsposition 21 bewegt werden.

Die Werkzeugwechselposition 20 ist jene Position des Werkzeugträgers 16, in welcher sich dieser der neben der Werkzeugaufnahme 5 der Abkantpresse 2 befindet. Befindet sich der Werkzeugträger 16 in seiner Werkzeugwechselposition 20, so können die Biegewerkzeuge 6 entweder vom Werkzeugträger 16 in die Werkzeugaufnahme 5 oder von der Werkzeugaufnahme 5 in den Werkzeugträger 16 verschoben werden.

Die Werkzeugbestückungsposition 21 ist jene Position des Werkzeugträger 16, in welcher sich dieser im Bereich des Werkzeugspeichers 15 befindet. Wenn sich der Werkzeugträger 16 in seiner Werkzeugbestückungsposition 21 befindet, so können Biegewerkzeuge 6 vom Werkzeugspeicher 15 in den Werkzeugträger 16 verschoben werden bzw. Biegewerkzeuge 6 vom Werkzeugträger 16 in den Werkzeugspeicher 15 verschoben werden. Weiters ist es auch denkbar, dass als Werkzeugbestückungsposition 21 jene Position bezeichnet wird in welcher der Werkzeugträger 16 im Werkzeugspeicher 15 zwischengelagert wird.

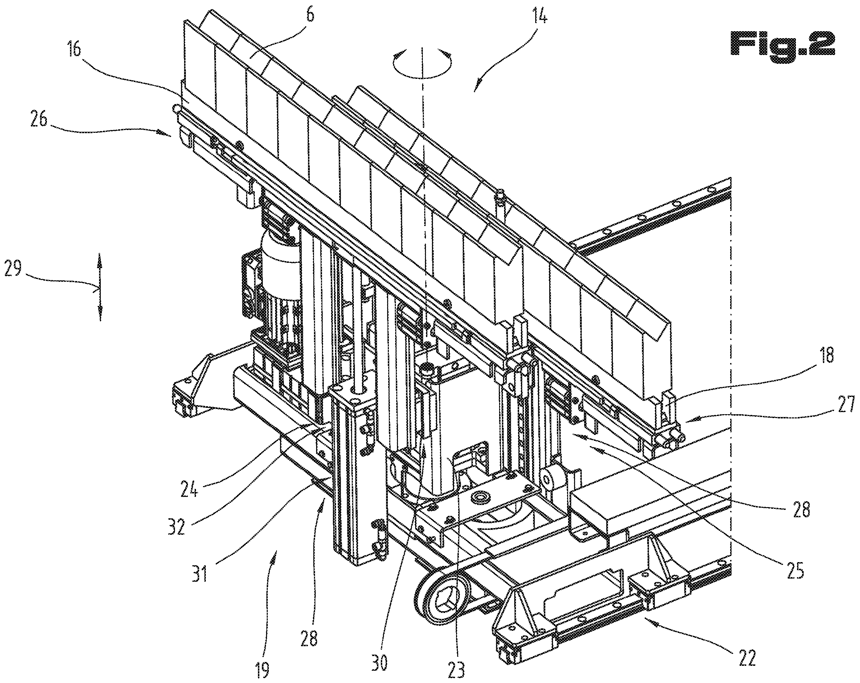

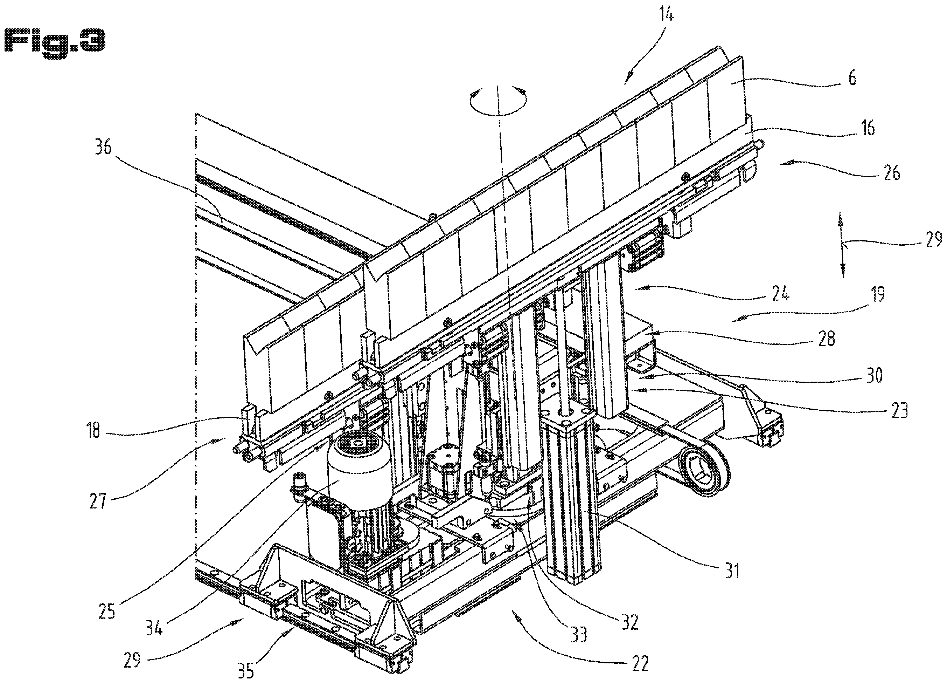

In den Figuren 2 und 3 ist in einer perspektivischen Darstellung aus verschiedenen Blickwinkeln eine weitere und gegebenenfalls für sich eigenständige Ausführungsform der Werkzeugwechselvorrichtung 14 gezeigt, wobei wiederum für gleiche Teile gleiche Bezugszeichen bzw. Bauteilbezeichnungen wie in der vorangegangenen Figur 1 verwendet werden. Um unnötige Wiederholungen zu vermeiden, wird auf die detaillierte Beschreibung in der vorangegangenen Figur 1 hingewiesen bzw. Bezug genommen.

Wie aus Figur 2 ersichtlich kann vorgesehen sein, dass die Werkzeugwechselvorrichtung 14 ein Grundgestell 22 aufweist, an welchem eine Manipulationsarmaufnahme 23 mit einem ersten Manipulationsarm 24 und einem zweiten Manipulationsarm 25 angeordnet sind, wobei die beiden Manipulationsarme 24, 25 zur Aufnahme der Werkzeugträger 16 ausgebildet sind. Insbesondere kann vorgesehen sein, dass der erste Manipulationsarm 24 eine erste Koppelvorrichtung 26 aufweist, mittels welcher der Werkzeugträger 16 abnehmbar am ersten Manipulationsarm 24 aufgenommen werden kann. Analog dazu kann vorgesehen sein, dass der zweite Manipulationsarm 25 eine zweite Koppelvorrichtung 27 aufweist, mittels welcher der Werkzeugträger 16 abnehmbar am zweiten Manipulationsarm 25 aufgenommen werden kann.

Die beiden Manipulationsarme 24, 25 können jeweils eine Linearverstellung 28 aufweisen, mittels welchen die beiden Koppelvorrichtungen 27, 28 und dadurch die anderen Manipulationsarmen 24, 25 aufgenommenen Werkzeugträger 16 unabhängig voneinander in vertikaler Richtung 29 verschiebbar sind. Insbesondere kann vorgesehen sein, dass die beiden Manipulationsarme 24, 25 jeweils eine Führungseinheit 30 aufweisen, mittels welchem Koppelvorrichtungen 27, 28 in der vertikalen Richtung 29 geführt sind.

Durch die Führungseinheit 30 kann erreicht werden, dass die Koppelvorrichtungen 27, 28 eine hohe Steifigkeit aufweisen und dadurch Positionsgenau bewegt bzw. platziert werden können. Die Führungseinheit 30 kann beispielsweise mittels Führungsschienen realisiert werden, an welchen jeweils eine der Koppelvorrichtungen 27, 28 angeordnet ist, wobei die Führungsschienen in einer Schienenaufnahme geführt werden können welche an der Manipulationsarmaufnahme 23 angeordnet sein können. Die Verbindung zwischen Führungsschienen und Schienenaufnahme kann beispielsweise durch eine formschlüssige Gleitflächenführung oder durch eine Kugelführung realisiert werden.

Weiters kann vorgesehen sein, dass die Koppelvorrichtungen 27, 28 mittels einer Antriebsvorrichtung 31 in der vertikalen Richtung 29 verschoben werden. Die Antriebsvorrichtung 31 kann beispielsweise durch einen Pneumatikzylinder gebildet sein. Ein derartiger Pneumatikzylinder kann beispielsweise derart in der Manipulationsvorrichtung 19 verbaut sein, dass die Koppelvorrichtung 27, 28 mit einer Kolbenstange des Pneumatikzylinders wirkverbunden ist und das Gehäuse des Pneumatikzylinders mit der Manipulationsarmaufnahme wirkverbunden ist. Weiters kann vorgesehen sein, dass eine weitere Antriebsvorrichtung 32 in Form eines weiteren Pneumatikzylinders ausgebildet ist, welcher dem ersten Peumatikzylinder vorgeschalteten ist, wodurch eine Teleskopwirkung der Verstellmöglichkeit der Koppelvorrichtungen 27, 28 erreicht werden kann und somit ein möglichst großer Verstellweg bei möglichst kleinem Bauraum erreicht werden kann.

In einer alternativen Ausführungsvariante ist es auch denkbar, dass die Antriebsvorrichtung 31 beispielsweise in Form eines Servomotors ausgebildet ist und somit einen größeren Verfahren Weg aufweist.

Weiters kann vorgesehen sein, dass die Manipulationsarmaufnahme 23 mitsamt der daran angeordneten Manipulationsarme 24, 25 verdrehbar am Grundgestell 22 aufgenommen ist. Insbesondere kann vorgesehen sein, dass mittig des Grundgestells 22 eine Lageranordnung 33 ausgebildet ist, in welcher die Manipulationsarmaufnahme 23 aufgenommen ist. Dabei kann vorgesehen sein, dass die Manipulationsarmaufnahme 23 mittels dieser Lageranordnung 33 zumindest einen Winkel von 180° schwenkbar ist. Weiters kann vorgesehen sein, dass ein Drehantrieb 34 ausgebildet ist, welcher mittels eines Zwischengetriebes oder auch direkt mit der Manipulationsarmaufnahme 23 gekoppelt ist, um diese drehen zu können.

Wie aus den Figuren 2 und 3 weiters ersichtlich, kann auch vorgesehen sein, dass das Grundgestell 22 der Manipulationsvorrichtung 19 mittels einer Linearführung 35 verschiebbar in der Bearbeitungsanlage 1 angeordnet ist, um mittels der Manipulationsvorrichtung 19 den Werkzeugträger 16 zwischen der Werkzeugwechselposition 20 und der Werkzeugbestückungsposition 21 bewegen zu können. Die Linearführung 35 kann ebenfalls in Form einer Zweitführung oder in Form einer Kugelführung ausgebildet sein. Weiters kann ein Linearantrieb 36 ausgebildet sein, mittels welchem das Grundgestell 22 verschoben werden kann. Der Linearantrieb 36 kann beispielsweise durch einen Zahnriemen gebildet sein, welcher mit dem Grundgestell 22 gekoppelt ist zwischen einer Antriebsstation und einer Umlenkstation geführt ist.

In einer alternativen Ausführungsvariante kann der Linearantrieb 36 beispielsweise mittels einem Ritzel, welches in eine Zahnstange eingreift, ausgeführt sein.

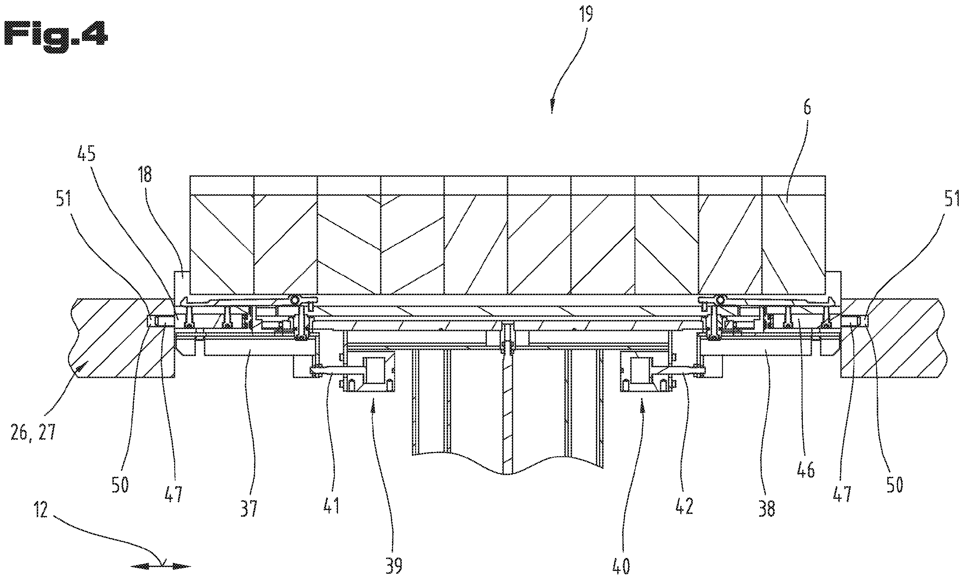

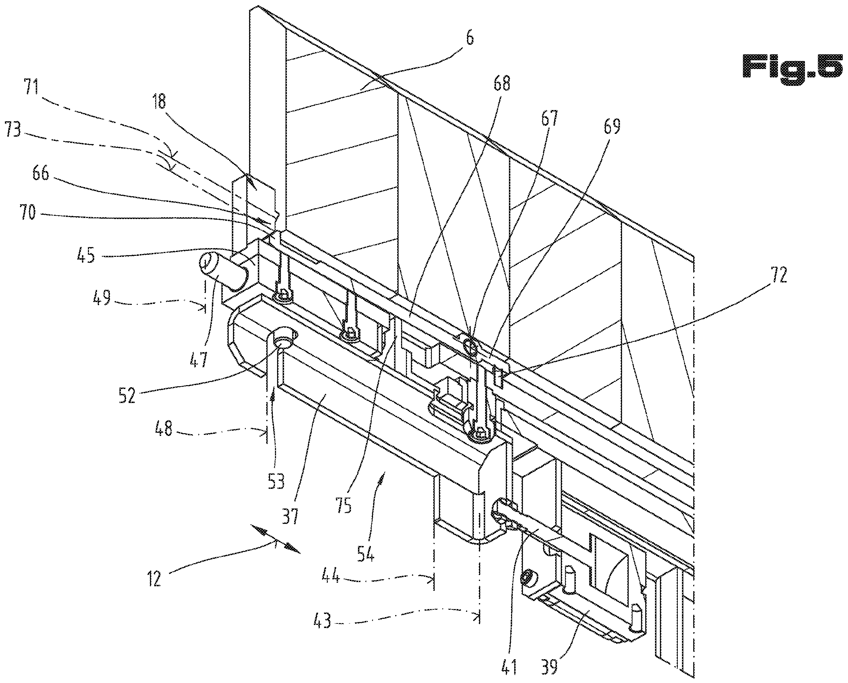

In der Figur 4 ist in einer Schnittdarstellung und in der Figur 5 in einer perspektivischen Schnittdarstellung eine weitere und gegebenenfalls für sich eigenständige Ausführungsform der Werkzeugwechselvorrichtung 14 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Die weitere Figurenbeschreibung bezieht sich auf eine Zusammenschau der Figuren 4 und 5. In diesen Figuren jeweils eine Schnittdarstellung eines der beiden Manipulationsarme 24, 25 gezeigt, wobei beide Manipulationsarme 24, 25 baugleich ausgeführt sein können und daher der Kürze halber auf eine Beschreibung bzw. Darstellung bei der einzelnen Manipulationsarme 24, 25 verzichtet wird.

In den Schnittdarstellungen der Figuren 4 und 5 ist die Aufnahmevertiefung 18, welche im Werkzeugträger 16 angeordnet sein kann besonders gut ersichtlich.

Wie aus den Figuren 4 und 5 weiters ersichtlich kann vorgesehen sein, dass die Koppelvorrichtungen 27, 28 jeweils ein erstes Betätigungselement 37 und ein zweites Betätigungselement 38 aufweisen. Die beiden Betätigungselemente 37, 38 können in horizontaler Verschieberichtung 12 verschiebbar an den Koppelvorrichtungen 27, 28 ausgebildet sein. Weiters kann vorgesehen sein, dass das erste Betätigungselement 37 mit einem ersten Aktor 39 und das zweite Betätigungselement 38 mit einem zweiten Aktor 40 gekoppelt ist. Die beiden Aktoren 39, 40 können in Form von Pneumatikzylindern ausgeführt sein, wobei vorgesehen sein kann, dass die Betätigungselemente 37, 38 jeweils an einer Kolbenstange 41, 42 der Aktoren 39, 40 angeordnet sind und direkt von dieser gehalten werden.

Mittels den Aktoren 39, 40 können die Betätigungselemente 37, 38 zwischen einer Ruhestellung 43 und einer Betätigungsstellung 44 bewegt werden. Weiters kann vorgesehen sein, dass im Werkzeugträger 16 ein erstes Arretierelement 45 und ein zweites Arretierelement 46 ausgebildet sind in welchen jeweils zumindest ein Arretierzapfen 47 ausgebildet, welcher in welche in horizontaler Richtung 12 verschiebbar im Arretierelement 45, 46 aufgenommen ist. Weiters kann vorgesehen sein, dass die Arretierzapfen 47 mit den Betätigungselementen 37, 38 koppelbar sind und somit von diesen bewegt werden können.

In einer alternativen Ausführungsvariante kann vorgesehen sein, dass Arretierelemente 45, 46 mit daran angeordneten Arretierzapfen 47 im Werkzeugträger 16 verschiebbar aufgenommen sind. Insbesondere kann bei einer derartigen Ausführungsvariante vorgesehen sein, dass die Arretierelemente 45, 46 mit den Betätigungselementen 37, 38 koppelbar sind und somit von diesen bewegt werden können.

Weiters kann vorgesehen sein, dass die Arretierelemente 45, 46 jeweils zumindest einen Arretierzapfen 47 aufweisen, welcher über dem Arretierelement 45, 46 vorstehend ausgebildet ist.

Das Arretierelement 45, 46 bzw. der Arretierzapfen 47 kann mittels dem Betätigungselement 37, 38 zwischen einer Grundstellung 48 und einer Arretierstellung 49 hin und her verschoben werden. In einer Weiterbildung kann vorgesehen sein, dass pro Arretierelement 45, 46 zwei der Arretierzapfen 47 angeordnet sind. Dadurch kann erreicht werden, dass der Werkzeugträger 16 Positionsgenau in den Halteelementen 50 aufgenommen werden kann.

Außerdem kann vorgesehen sein, dass im Bereich der Werkzeugwechselposition 20 bzw. im Bereich der Werkzeugbestückungsposition 21 zwei einander gegenüberliegende Halteelemente 50 ausgebildet sind, in welche die Arretierelemente 45, 46 eingreifen können und somit der Werkzeugträger 16 in den Halteelementen 50 aufgenommen bzw. abgelegt werden kann. Insbesondere kann vorgesehen sein, dass in den Halteelementen 50 eine Zapfenaufnahme 51 ausgebildet ist, in welche die Arretierzapfen 47 eingreifen.

Weiters kann vorgesehen sein, dass in den Arretierelementen 45, 46 ein Mitnehmerzapfen 52 ausgebildet ist, welcher in eine im Betätigungselement 37, 38 angeordnete Ausnehmung 53 für den Mitnehmerzapfen 52 eingreift. Der Mitnehmerzapfen 52 ist derart am Arretierelement 45, 46 angeordnet, dass er an einer Unterseite des Werkzeugträgers 16 vorsteht. Die Ausnehmung für den Mitnehmerzapfen 53 kann beispielsweise in Form einer einfachen Bohrung ausgebildet sein, wobei der Mitnehmerzapfen 52 in axialer Richtung in die Bohrung einführbar ist. Alternativ dazu kann vorgesehen sein, dass die Ausnehmung 53 für den Mitnehmerzapfen 52 in Form einer schlitzförmigen Ausnehmung ausgebildet ist. Dadurch ist es auch möglich, dass der Mitnehmerzapfen 52 seitlich in die Ausnehmung 53 eingeschoben wird.

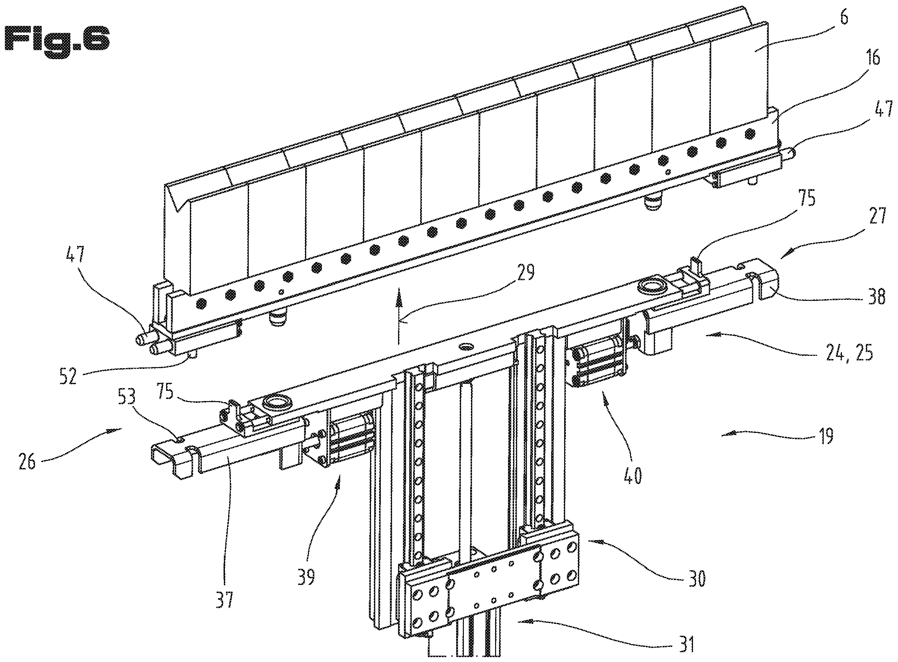

Figur 6 zeigt eine perspektivische Ansicht der Manipulationsvorrichtung 19, wobei der Werkzeugträger 16 in einer von der Koppelvorrichtung 26, 27 entkoppelt Stellung dargestellt ist.

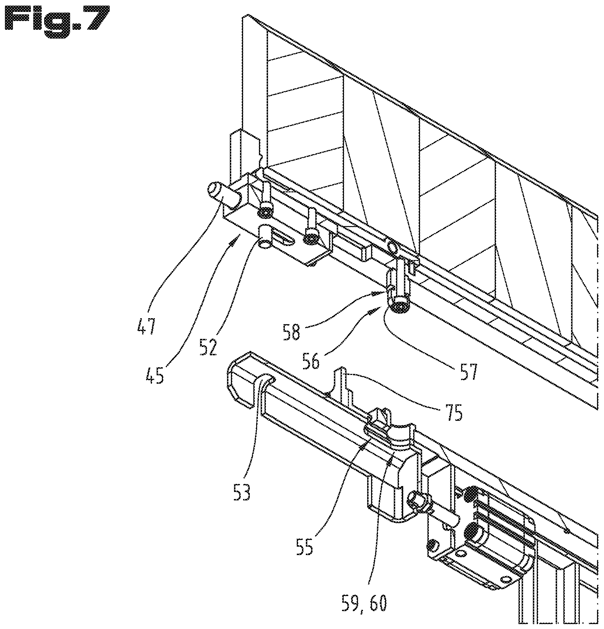

Figur 7 zeigt eine weitere perspektivische Ansicht der Manipulationsvorrichtung 19 in einer Schnittdarstellung.

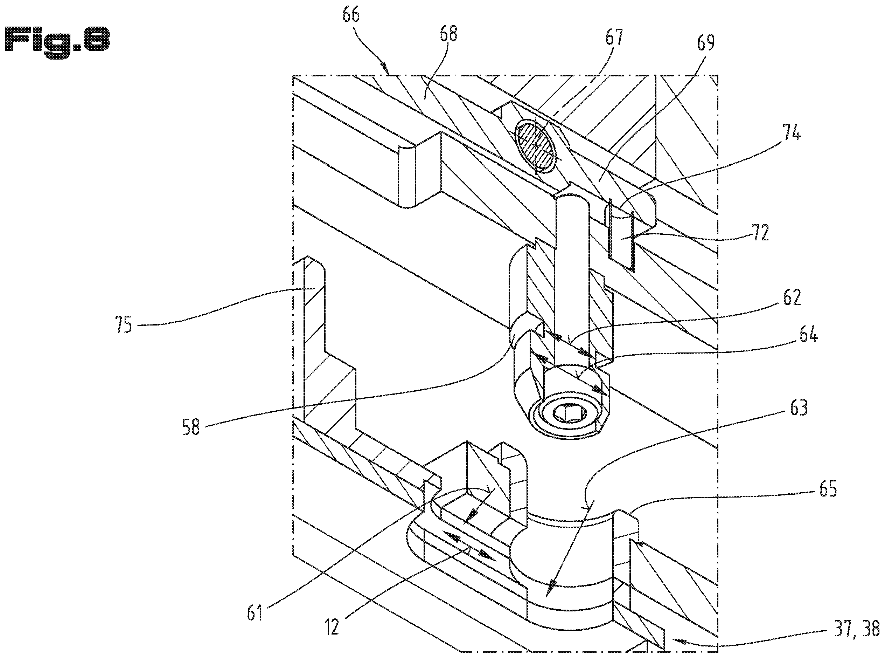

Figur 8 zeigt die Koppelvorrichtung 26, 27 in einer geschnittenen Detaildarstellung.

Die weitere Figurenbeschreibung basiert auf einer Zusammenschau der Figuren 4-8.

Besonders gut in der Figur 7 ersichtlich kann weiters vorgesehen sein, dass im Betätigungselement 37, 38 eine schlitzförmige Ausnehmung 55 ausgebildet ist, welche zur Aufnahme eines im Werkzeugträger 16 angeordneten Haltezapfens 56 dient. Insbesondere kann vorgesehen sein, dass der Haltezapfen 56 einen Fixierkopf 57 aufweist, welcher durch eine nutförmige Ausnehmung 58 im Haltezapfen 56 gebildet ist. Weiters kann vorgesehen sein, dass die schlitzförmige Ausnehmung 55 einen Einführbereich 59 aufweist, welche durch eine Erweiterung 60 gebildet ist.

Weiters kann vorgesehen sein, dass die schlitzförmige Ausnehmung 55 eine Breite 61 aufweist, welche geringfügig größer ist als eine Hauptabmessung 62 des Nutgrundes der nutförmigen Ausnehmung 58. Außerdem kann vorgesehen sein, dass eine lichte Weite 63 der Erweiterung 60 geringfügig größer ist als eine Außenabmessung 64 des Fixierkopfes 57.

Durch die oben beschriebene Dimensionierung des Haltezapfens 56 kann erreicht werden, dass der Haltezapfen 56 im Einführbereich 59 in die schlitzförmige Ausnehmung 55 des Betätigungselementes 37, 38 eingeführt werden kann. Anschließend kann das Betätigungselement 37, 38 in der horizontalen Verschieberichtung 12 verschoben werden. Dadurch kann die nutförmige Ausnehmung 58 des Haltezapfens 56 formschlüssig mit der schlitzförmigen Ausnehmung 55 des Betätigungselementes 37, 38 in Eingriff gebracht werden.

Weiters kann vorgesehen sein, dass die Koppelvorrichtung 26, 27 eine Einführbuchse 65 umfasst. Die Einführbuchse 65 dient dazu, um beim Verschieben der Manipulationsvorrichtung 19 in vertikaler Richtung 29 das Einführen des Haltezapfens 56 in die schlitzförmige Ausnehmung 55 zu erleichtern.

Wie aus Figur 8 gut ersichtlich kann weiters vorgesehen sein, dass der Haltezapfen 56 mittels einem Befestigungselement am Werkzeugträger 16 befestigt ist.

Aus Figur 5 ist besonders gut ersichtlich das vorgesehen sein, dass die Koppelvorrichtung 26, 27 einen Sicherungshaken 66 umfasst. Der Sicherungshaken 66 ist vorzugsweise um einen Drehpunkt 67 schwenkbar im Werkzeugträger 16 gelagert. Der Sicherungshaken 66 weist dabei einen ersten Hebelarm 68 und einen zweiten Hebelarm 69 auf. Der erste Hebelarm 68 befindet sich an einer ersten Seite des Drehpunktes 67 und der zweite Hebelarm 69 an einer zweiten Seite des Drehpunktes 67.

Weiters kann vorgesehen sein, dass am ersten Hebelarm 68 eine Sicherungsnase 70 ausgebildet ist welche, wenn sich der Sicherungshaken 66 in einer Sicherungsstellung 71 befindet, als mechanischer Anschlag wirkt und somit das Verschieben der Biegewerkzeuge 6 unterbindet. Insbesondere kann dadurch vermieden werden, dass die Biegewerkzeuge 6 unbeabsichtigt, beispielsweise aufgrund der Massenträgheit oder aufgrund von Vibrationen aus dem Werkzeugträger 16 herausfallen.

Der Sicherungshaken 66 wird mittels einem Federelement 72, welches auf den zweiten Hebelarm 69 wirkt, in eine Freigabestellung 73 gedrückt. Das Federelement 72 wirkt hierbei auf eine Unterseite 74 des zweiten Hebelarmes 69. insbesondere kann vorgesehen sein, dass das Betätigungselement 37, 38 eine Betätigungsnase 75 aufweist, welche auf den ersten Hebelarm 68 wirkt, und somit den Sicherungshaken 66 von der Freigabestellung 73 in die Sicherungsstellung 71 drückt.

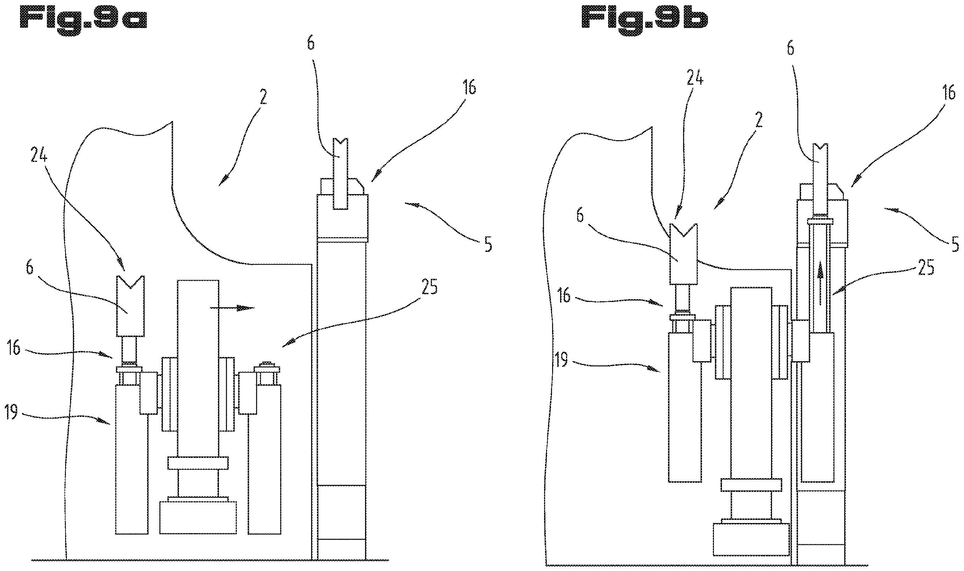

In den Figuren 9a bis 9f ist der Werkzeugwechselvorgang in einzelnen Verfahrensschritten schematisch dargestellt, bzw. wird der Werkzeugwechselvorgang in der weiteren Figurenbeschreibung anhand der Figuren 9a bis 9f unter Zuhilfenahme der restlichen Figuren beschrieben.

Als Vorbereitung für den ersten Verfahrensschritt entsprechend der Figur 9a wird der erste Manipulationsarm 24 der Manipulationsvorrichtung 19 mit einem Werkzeugträger 16 gekoppelt, in welchem die einzusetzenden Biegewerkzeuge 6 vorbereitet sind. Beim Ankoppelvorgang wird der Werkzeugträger 16 mittels dem ersten Manipulationsarm 24 aus seiner Werkzeugbestückungsposition 21 herausgenommen.

Der Ankoppelvorgang zum Koppeln der Manipulationsvorrichtung 19 mit dem Werkzeugträger 16 an sich läuft folgendermaßen ab. In einem ersten Verfahrensschritt wird der Manipulationsarm 24, 25 in vertikaler Richtung 29 an den Werkzeugträger 16, welcher sich in seiner Werkzeugwechselposition 20 oder in seiner Werkzeugbestückungsposition 21 befindet, herangefahren. Dabei wird der Haltezapfen 56 in die Erweiterung 60 des Betätigungselementes 37, 38 eingeführt. Gleichzeitig greifen die Mitnehmerzapfen 52 der Arretierzapfen 47 in die im Betätigungselement 37, 38 angeordnete Ausnehmung 53, wodurch die Arretierzapfen 47 mit den Betätigungselementen 37, 38 bewegungsgekoppelt sind. Gleichzeitig drückt die Betätigungsnase 75 des Betätigungselementes 37, 38 auf die Unterseite des ersten Hebelarmes 68 und befördert dadurch den Sicherungshaken 66 in seine Sicherungsstellung 71. Anschließend wird das Betätigungselement 37, 38 mittels dem Aktor 39, 40 von seiner Betätigungsstellung 44 in seine Ruhestellung 43 verschoben. Durch diesen Verschiebevorgang wird der Haltezapfen 56 in der schlitzförmigen Ausnehmung 55 des Betätigungselementes 37, 38 gesichert, sodass der Werkzeugträger 16 am erste Manipulationsarm 24, 25 gesichert aufgenommen ist. Gleichzeitig wird durch den Verschiebevorgang des Betätigungselementes 37, 38 der Arretierzapfen 47 von seiner Arretierstellung 47 in seine Grundstellung 48 verschoben und dadurch der Werkzeugträger 16 aus der Werkzeugwechselposition 20 oder der Werkzeugbestückungsposition 21 freigegeben und kann somit von der Manipulationsvorrichtung 19 bewegt werden. Gleichzeitig kann vorgesehen sein, dass der Sicherungshaken 66 durch den Verschiebevorgang weiter in seine Sicherungsstellung 71 gedrängt wird.

Der Abkoppelvorgang bei dem der Werkzeugträger 16 von der Manipulationsvorrichtung 19 in die Werkzeugwechselposition 20 oder in die Werkzeugbestückungsposition 21 eingesetzt wird, läuft genau in umgekehrter Reihenfolge der obigen Verfahrensschritte des Ankoppelvorganges ab.

Beim ersten Verfahrensschritt entsprechend Figur 9a wird die Manipulationsvorrichtung 19 mit dem am ersten Manipulationsarm 24 aufgenommenen Werkzeugträger 16 zur Abkantpresse 2 bewegt. In der Abkantpresse 2 ist ein weiterer Werkzeugträger 16 in der Werkzeugwechselposition 20 bereitgestellt, wobei in diesem weiteren Werkzeugträger 16 Biegewerkzeuge 6 aufgenommen sind, welche aus der Abkantpresse 2 entfernt werden sollen.

In einem weiteren Verfahrensschritt entsprechend der Figur 9b wird der zweite Manipulationsarm 25 in vertikaler Richtung 29 nach oben bewegt, um im Ankoppelvorgang den weiteren Werkzeugträger 16 von der Abkantpresse 2 am zweiten Manipulationsarm 25 aufnehmen zu können.

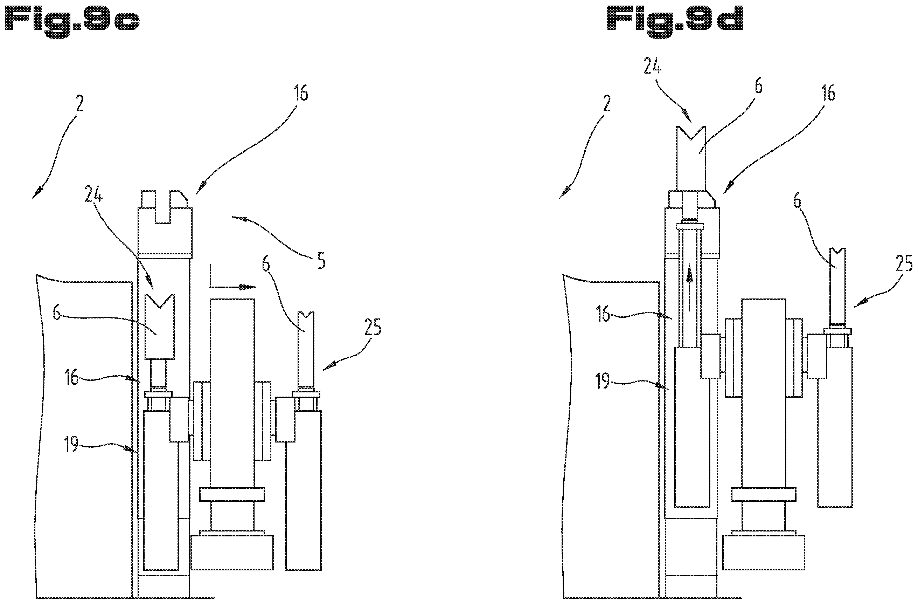

In einem weiteren Verfahrensschritt entsprechend der Figur 9c wird der zweite Manipulationsarm 25 in vertikaler Richtung 29 nach unten bewegt und anschließend die Manipulationsvorrichtung 19 verschoben, sodass der erste Manipulationsarm 24 mit dem darauf aufgenommenen Werkzeugträger 16 unter der Werkzeugwechselposition 20 positioniert ist.

In einem weiteren Verfahrensschritt entsprechend der Figur 9d wird der erste Manipulationsarm 24 in vertikaler Richtung 29 nach oben bewegt um den Werkzeugträger 16 im Abkoppelvorgang in der Werkzeugwechselposition 20 ablegen zu können. Die im Werkzeugträger 16 aufgenommenen Biegewerkzeuge 6 können anschließend mittels der Einzugsvorrichtung 17 vom Werkzeugträger 16 in die Werkzeugaufnahme 5 eingeschoben werden.

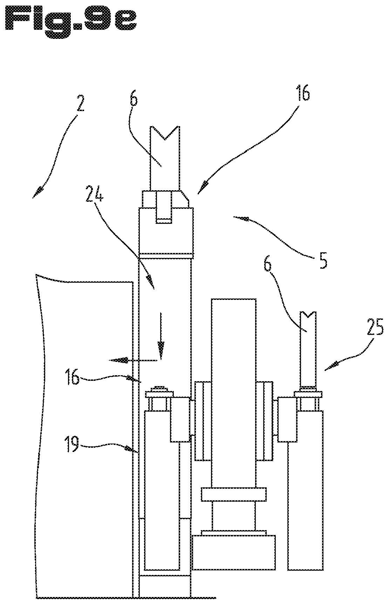

In einem weiteren Verfahrensschritt entsprechend der Figur 9e wird der erste Manipulationsarm 24 in vertikaler Richtung 29 nach unten bewegt und anschließend der am zweiten Manipulationsarm 25 aufgenommene Werkzeugträger 16 in die Werkzeugbestückungsposition 21 verschoben, um die darauf aufgenommenen Biegewerkzeuge 6 im Werkzeugspeicher 15 aufnehmen zu können und eine neue Tranche von zu rüstenden Biegewerkzeugen 6 im Werkzeugspeicher 15 vorbereiten zu können.

Durch die beschriebenen Verfahrensschritte kann der Werkzeugwechselvorgang erheblich beschleunigt werden.

Die Ausführungsbeispiele zeigen mögliche Ausführungsvarianten der Bearbeitungsanlage 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Bearbeitungsanlage 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Bearbeitungsanlage | 31 | Antriebsvorrichtung |
| 2 | Abkantpresse | 32 | weitere Antriebsvorrichtung |
| 3 | Blech | 33 | Lageranordnung |
| 4 | erster Pressbalken | 34 | Drehantrieb |
| 5 | Werkzeugaufnahme | 35 | Linearführung |
| 6 | Biegewerkzeug | 36 | Linearantrieb |
| 7 | zweiter Pressbalken | 37 | erstes Betätigungselement |
| 8 | Pressenantriebseinheit | 38 | zweites Betätigungselement |
| 9 | Rechnereinheit | 39 | erster Aktor |
| 10 | Eingabe- Anzeigeeinheit | 40 | zweiter Aktor |
| 11 | Werkzeugkörper | 41 | erste Kolbenstange |
| 12 | horizontale Verschieberichtung | 42 | zweite Kolbenstange |
| 13 | Biegekante | 43 | Ruhestellung |
| 14 | Werkzeugwechselvorrichtung | 44 | Betätigungsstellung |
| 15 | Werkzeugspeicher | 45 | erstes Arretierelement |
| 16 | Werkzeugträger | 46 | zweites Arretierelement |
| 17 | Einzugsvorrichtung | 47 | Arretierzapfen |
| 18 | Aufnahmevertiefung | 48 | Grundstellung Arretierelement |
| 19 | Manipulationsvorrichtung | 49 | Arretierstellung Arretierelement |
| 20 | Werkzeugwechselposition | 50 | Halteelement |
| 21 | Werkzeugbestückungsposition | 51 | Zapfenaufnahme |
| 22 | Grundgestell | 52 | Mitnehmerzapfen |
| 23 | Manipulationsarmaufnahme | 53 | Ausnehmung für Mitnehmerzapfen |
| 24 | erster Manipulationsarm | 54 | Unterseite Werkzeugträger |
| 25 | zweiter Manipulationsarm | 55 | schlitzförmige Ausnehmung |
| 26 | erste Koppelvorrichtung | 56 | Haltezapfen |
| 27 | zweite Koppelvorrichtung | 57 | Fixierkopf |
| 28 | Linearverstellung | 58 | nutförmige Ausnehmung |
| 29 | vertikale Richtung | 59 | Einführbereich |
| 30 | Führungseinheit | 60 | Erweiterung |
| 61 | Breite schlitzförmige Ausnehmung | | |
| 62 | Hauptabmessung Nutgrund | | |
| 63 | lichte Weite der Erweiterung | | |
| 64 | Außenabmessung Fixierkopf | | |
| 65 | Einführbuchse | | |
| 66 | Sicherungshaken | | |
| 67 | Drehpunkt | | |
| 68 | erster Hebelarm | | |
| 69 | zweiter Hebelarm | | |
| 70 | Sicherungsnase | | |
| 71 | Sicherungsstellung | | |
| 72 | Federelement | | |
| 73 | Freigabestellung | | |
| 74 | Unterseite zweiter Hebelarm | | |
| 75 | Betätigungsnase des Betätigungselementes | | |

## Patentansprüche

1. Werkzeugwechselvorrichtung (14) für eine Abkantpresse (2), die Werkzeugwechselvorrichtung (14) umfassend:
einen Werkzeugträger (16), welcher zur Aufnahme von Biegewerkzeugen (6) eine Aufnahmevertiefung (18) aufweist, wobei die Biegewerkzeuge (6) zwischen dem Werkzeugträger (16) und einer in einem Pressbalken (4,7) der Abkantpresse (2) ausgebildeten Werkzeugaufnahme (5) verschiebbar sind;
eine Manipulationsvorrichtung (19) zum Manipulieren des Werkzeugträgers (16) zwischen einer Werkzeugwechselposition (20), in welcher der Werkzeugträger (16) neben der Werkzeugaufnahme (5) angeordnet ist um die Biegewerkzeuge (6) vom Werkzeugträger (16) in die Werkzeugaufnahme (5) verschieben zu können, und einer Werkzeugbestückungsposition (21), in welcher der Werkzeugträger (16) im Bereich eines Werkzeugspeichers (15) zum Bestücken mit Biegewerkzeugen (6) angeordnet ist,
**dadurch gekennzeichnet, dass**
die Manipulationsvorrichtung (19) einen ersten Manipulationsarm (24) und einen zweiten Manipulationsarm (25) aufweist, wobei am ersten Manipulationsarm (24) eine erste Koppelvorrichtung (26) zur Aufnahme eines ersten Werkzeugträgers (16) und am zweiten Manipulationsarm (25) eine zweite Koppelvorrichtung (27) zur Aufnahme eines zweiten Werkzeugträgers (16) ausgebildet sind.

2. Werkzeugwechselvorrichtung nach Anspruch 1, **dadurch gekennzeichnet, dass** beide Manipulationsarme (24, 25) eine Linearverstellung (28) aufweisen, mittels welchen die beiden Koppelvorrichtungen (27, 28) unabhängig voneinander in vertikaler Richtung (29) verschiebbar sind.

3. Werkzeugwechselvorrichtung nach Anspruch 2, **dadurch gekennzeichnet, dass** zumindest einer der Manipulationsarme (24, 25) eine Führungseinheit (30), wie etwa einen Führungsschlitten aufweist, an welchem die Koppelvorrichtung (26, 27) angeordnet ist, wobei die Führungseinheit (30) mit einer Antriebsvorrichtung (31), insbesondere einem Pneumatikzylinder, gekoppelt ist.

4. Werkzeugwechselvorrichtung nach Anspruch 3, **dadurch gekennzeichnet, dass** zumindest eine weitere Antriebsvorrichtung (32), insbesondere ein weiterer Pneumatikzylinder, ausgebildet ist, mittels welchem die Antriebsvorrichtung (31) des Führungsschlittens (30) verschiebbar ist, wodurch eine Teleskopfunktion ausgebildet ist.

5. Werkzeugwechselvorrichtung nach einem der vorhergehenden Ansprüche, **dadurch gekennzeichnet, dass** beide Manipulationsarme (24, 25) an einer Manipulationsarmaufnahme (23) angeordnet sind, wobei die Manipulationsarmaufnahme (23) relativ zu einem Grundgestell (22) der Manipulationsvorrichtung (19) verdrehbar gelagert sind.

6. Werkzeugwechselvorrichtung nach einem der vorhergehenden Ansprüche, **dadurch gekennzeichnet, dass** die Koppelvorrichtungen (26, 27) jeweils ein erstes Betätigungselement (37) und ein zweites Betätigungselement (38) aufweist, welche mittels einem ersten Aktor (39) und einem zweiten Aktor (40) in horizontaler Richtung (12) zwischen einer Ruhestellung (43) und einer Betätigungsstellung (44) verschiebbar sind, wodurch der Werkzeugträger (16) freigebbar bzw. mit der Koppelvorrichtung (26) arretierbar ist.

7. Werkzeugwechselvorrichtung nach Anspruch 6, **dadurch gekennzeichnet, dass** am Werkzeugträger (16) ein erstes Arretierelement (45) und ein zweites Arretierelement (46) ausgebildet sind, welche jeweils zumindest einen Arretierzapfen (47) aufweisen, welcher zum Eingriff in eine in der Werkzeugwechselposition (20) oder in der Werkzeugbestückungsposition (21) angeordnete Zapfenaufnahme (51) verschiebbar im Arretierelement (45, 46) gelagert sind, wobei die Arretierzapfen (47) mittels der Betätigungselemente (37, 38) verschiebbar sind.

8. Werkzeugwechselvorrichtung nach einem der Ansprüche 6 bis 7, **dadurch gekennzeichnet, dass** an den Arretierzapfen (47) ein Mitnehmerzapfen (52) ausgebildet ist, welcher in Richtung Betätigungselemente (37, 38) abstehend ausgebildet ist, und dass in den Betätigungselementen (37, 38) eine mit dem Mitnehmerzapfen (52) korrespondierende Ausnehmung (53) ausgebildet ist.

9. Werkzeugwechselvorrichtung nach einem der Ansprüche 6 bis 8, **dadurch gekennzeichnet, dass** im Betätigungselement (37, 38) eine schlitzförmige Ausnehmung (55) ausgebildet ist, welche in einem Einführbereich (59) eine Erweiterung (60) aufweist, und dass am Werkzeugträger (16) ein Haltezapfen (56) angeordnet ist, welcher einen Fixierkopf (57) mit einer nutförmigen Ausnehmung (58) aufweist, wobei eine Breite (61) der schlitzförmigen Ausnehmung (55) im Betätigungselement (37, 38) geringfügig größer ist als die Hauptabmessung (62) des Nutgrundes der nutförmigen Ausnehmung (58) und wobei die lichte Weite (63) der Erweiterung (60) geringfügig größer ist als eine Außenabmessung (64) des Fixierkopfes (57) des Haltezapfens (56).

10. Werkzeugwechselvorrichtung nach einem der vorhergehenden Ansprüche, **dadurch gekennzeichnet, dass** in der Aufnahmevertiefung (18) des Werkzeugträgers (16) ein Sicherungshaken (66) ausgebildet ist, welcher um einen Drehpunkt (67) schwenkbar am Werkzeugträger (16) angeordnet ist, wobei der Sicherungshaken (66) an einem ersten Hebelarm (68) eine Sicherungsnase (70) aufweist, welche in einer Sicherungsstellung (71) als mechanischer Anschlag wirkt und somit das Verschieben der Biegewerkzeuge (6) unterbindet, und der Sicherungshaken (66) in einer Freigabestellung (73) im Werkzeugträger (16) versenkt ist, sodass die Biegewerkzeuge (6) seitlich aus dem Werkzeugträger (16) hinausgeschoben werden können, wobei der Sicherungshaken (66) mittels einem Federelement (72) in seine Freigabestellung (73) gedrückt ist und mittels dem Betätigungselement (37, 38) in die Sicherungsstellung (71) gedrückt werden kann.

11. Werkzeugwechselvorrichtung nach Anspruch 10, **dadurch gekennzeichnet, dass** an einer Seite des Drehpunktes (67) des Sicherungshakens (66) der erste Hebelarm (68) ausgebildet ist und dass an einer zweiten Seite des Drehpunktes (67) ein zweiter Hebelarm (69) ausgebildet ist, wobei das Federelement (72) als Druckfeder ausgebildet ist, welche an einer Unterseite (74) des zweiten Hebelarmes (69) wirkt und dadurch der Sicherungshaken (66) in seine Freigabestellung (73) gedrückt ist und dass am Betätigungselement (37, 38) eine Betätigungsnase (75) ausgebildet ist, welche auf den ersten Hebelarm (68) des Sicherungshakens (66) wirkt, wobei in der Betätigungsstellung (44) des Betätigungselementes (37, 38) der Sicherungshaken (66) in seine Freigabestellung (73) gedrückt ist und in der Ruhestellung (43) des Betätigungselementes (37, 38) der Sicherungshaken (66) in seine Sicherungsstellung (71) gedrückt ist.

12. Bearbeitungsanlage zum Biegen von Blechen, die Fertigungsanlage umfassend:
eine Abkantpresse (2) mit einem feststehenden Pressbalken (4) und einem relativ zu diesem verstellbaren Pressbalken (7), sowie an den Pressbalken (4, 7) ausgebildeten Werkzeugaufnahmen (5) zur Aufnahme von Biegewerkzeugen (6);
eine Werkzeugwechselvorrichtung (14) zum Wechseln der Biegewerkzeuge (6),
**dadurch gekennzeichnet, dass**
die Werkzeugwechselvorrichtung (14) nach einem der vorhergehenden Ansprüche ausgebildet ist.

13. Verfahren zum Durchführen eines Werkzeugwechsels an einer Abkantpresse (2), insbesondere unter Verwendung einer Vorrichtung nach einem der vorhergehenden Ansprüche, **dadurch gekennzeichnet, dass** das Verfahren folgende Verfahrensschritte umfasst:
- Bereitstellen eines ersten Werkzeugträgers (16), welcher zur Aufnahme von Biegewerkzeugen (6) ausgebildet ist, wobei der erste Werkzeugträger (16) an einem ersten Manipulationsarm (24) einer Manipulationsvorrichtung (19) aufgenommen ist;
- Bestücken des ersten Werkzeugträgers (16) mit im Werkzeugspeicher (15) gelagerten Biegewerkzeugen (6);
- Bereitstellen eines zweiten Werkzeugträgers (16) an der Werkzeugwechselposition (20), in welcher der Werkzeugträger (16) neben der Werkzeugaufnahme angeordnet ist;
- Verschieben der in einer Werkzeugaufnahme (5) der Abkantpresse (2) aufgenommenen Biegewerkzeuge (6) in den zweiten Werkzeugträger (16);
- Aufnehmen des zweiten Werkzeugträgers (16) mittels einem zweiten Manipulationsarm (25) der Manipulationsvorrichtung (19);
- Positionieren des ersten Werkzeugträgers (16) in die Werkzeugwechselposition (20) mittels dem ersten Manipulationsarm (24) der Manipulationsvorrichtung (19);
- Ablegen des ersten Werkzeugträgers (16) in der Werkzeugwechselposition (20);
- Transportieren des zweiten Werkzeugträgers (16) in eine Werkzeugbestückungsposition (21), in welcher der Werkzeugträger (16) im Bereich eines Werkzeugspeichers (15) zum Bestücken mit Biegewerkzeugen (6) angeordnet ist.

## Claims

1. A tool-changing device (14) for a press brake (2), the tool-changing device (14) comprising:
a tool carrier (16) comprising a receiving recess (18) for receiving bending tools (6),
wherein the bending tools (6) are displaceable between the tool carrier (16) and a tool holder (5) formed in a press beam (4, 7) of the press brake (2);
a manipulation apparatus (19) for manipulating the tool carrier (16) between a tool-changing position (20) in which the tool carrier (16) is arranged next to the tool holder (5) to allow for displacement of the bending tools (6) from the tool carrier (16) into the tool holder (5), and a tooling position (21) in which the tool carrier (16) is arranged in the region of a tool storage (15) for loading bending tools (6),
**characterized in that**
the manipulation apparatus (19) comprises a first manipulation arm (24) and a second manipulation arm (25), wherein a first coupling device (26) for receiving a first tool carrier (16) is formed on the first manipulation arm (24) and a second coupling device (27) for receiving a second tool carrier (16) is formed on the second manipulation arm (25).

2. The tool-changing device according to claim 1, **characterized in that** both manipulation arms (24, 25) each comprise a linear displacer (28) by means of which the two coupling devices (27, 28) can be displaced independently from one another in the vertical direction (29).

3. The tool-changing device according to claim 2, **characterized in that** at least one of the manipulation arms (24, 25) comprises a guide unit (30), such as a guide carriage, on which the coupling device (26, 27) is arranged, wherein the guide unit (30) is coupled to a drive device (31), in particular a pneumatic cylinder.

4. The tool-changing device according to claim 3, **characterized in that** at least one further drive device (32), in particular a further pneumatic cylinder, is provided, by means of which the drive device (31) of the guide carriage (30) can be displaced, whereby a telescopic functionality is provided.

5. The tool-changing device according to one of the preceding claims, **characterized in that** both manipulation arms (24, 25) are arranged on a manipulation arm receiver (23), wherein the manipulation arm receiver (23) is mounted so as to be rotatable relative to a base rack (22) of the manipulation device (19).

6. The tool-changing device according to one of the preceding claims, **characterized in that** the coupling devices (26, 27) each comprise a first actuator element (37) and a second actuator element (38), which are displaceable in the horizontal direction (12) between a rest position (43) and an actuating position (44) by means of a first actuator (39) and a second actuator (40), whereby the tool carrier (16) is releasable and/or lockable with the coupling device (26).

7. The tool-changing device according to claim 6, **characterized in that** on the tool carrier (16) a first locking element (45) and a second locking element (46) are formed, which each comprise at least one locking pin (47), which is/are mounted in the locking element (45, 46) so as to be displaceable for engagement in a pin receptacle (51) arranged in the tool-changing position (20) or in the tooling position (21), wherein the locking pins (47) are displaceable by means of the actuator elements (37, 38).

8. The tool-changing device according to one of claims 6 to 7, **characterized in that** on the locking pins (47) a tappet pin (52) is formed, which is formed so as to project in the direction of the actuator elements (37, 38), and that a recess (53) corresponding to the tappet pin (52) is formed in the actuator elements (37, 38).

9. The tool-changing device according to one of claims 6 to 8, **characterized in that** a slit-shaped recess (55) comprising an extension (60) in an insertion region (59) is formed in the actuator element (37, 38) and that a holding pin (56) comprising a fixing head (57) with a groove-shaped recess (58) is arranged on the tool carrier (16), wherein a width (61) of the slit-shaped recess (55) in the actuator element (37, 38) is slightly larger than the main dimension (62) of the groove base of the groove-shaped recess (58), and wherein the clear width (63) of the extension (60) is slightly larger than an outer dimension (64) of the fixing head (57) of the holding pin (56).

10. The tool-changing device according to one of the preceding claims, **characterized in that** a securing hook (66), which is arranged on the tool carrier (16) so as to be pivotable about a pivot point (67), is formed in the receiving recess (18) of the tool carrier (16), wherein the securing hook (66) on a first lever arm (68) comprises a securing lug (70), which acts as a mechanical stop in a securing position (71) and thus prevents displacement of the bending tools (6), and the securing hook (66) is recessed in the tool carrier (16) in a release position (73), such that the bending tools (6) can be slid out of the tool carrier (16) laterally, wherein the securing hook (66) is pressed into its release position (73) by means of a spring element (72) and can be pressed into the securing position (71) by means of the actuator element (37, 38).

11. The tool-changing device according to claim 10, **characterized in that** the first lever arm (68) is formed on a side of the pivot point (67) of the securing hook (66) and that a second lever arm (69) is formed on a second side of the pivot point (67), wherein the spring element (72) is formed as a compression spring, which acts on a bottom side (74) of the second lever arm (69) and the securing hook (66) is thereby pressed into its release position (73) and that an actuator lug (75), which acts on the first lever arm (68) of the securing hook (66), is formed on the actuator element (37, 38), wherein in the actuating position (44) of the actuator element (37, 38), the securing hook (66) is pressed into its release position (73) and in the rest position (43) of the actuator element (37, 38), the securing hook (66) is pressed into its securing position (71).

12. A processing plant for bending sheet metals, the manufacturing plant comprising:
a press brake (2) with a fixed press beam (4) and a press beam (7) adjustable relative thereto, as well as tool holders (5) for holding bending tools (6) formed on the press beams (4, 7);
a tool-changing device (14) for changing the bending tools (6),
**characterized in that**
the tool-changing device (14) is designed according to one of the preceding claims.

13. A method for carrying out a tool change on a press brake (2), in particular using a device according to one of the preceding claims, **characterized in that** the method comprises the following method steps:
- providing a first tool carrier (16), which is formed for receiving bending tools (6), wherein the first tool carrier (16) is held on a first manipulation arm (24) of a manipulation apparatus (19);
- loading the first tool carrier (16) with bending tools (6) stored in the tool storage (15);
- providing a second tool carrier (16) at the tool-changing position (20), in which the tool carrier (16) is arranged next to the tool holder;
- displacing the bending tools (6) held in a tool holder (5) of the press brake (2) into the second tool carrier (16);
- receiving the second tool carrier (16) by means of a second manipulation arm (25) of the manipulation apparatus (19);
- positioning the first tool carrier (16) in the tool-changing position (20) by means of the first manipulation arm (24) of the manipulation apparatus (19);
- placing down the first tool carrier (16) in the tool-changing position (20);
- transporting the second tool carrier (16) to a tooling position (21) in which the tool carrier (16) is arranged in the region of a tool storage (15) for loading bending tools (6).

## Revendications

1. Dispositif de changement d'outil (14) pour une presse plieuse (2), ce dispositif de changement d'outil (14) comprenant :
un porte-outil (16) qui comprend, pour le logement d'outils de pliage (6), une cavité de logement (18), les outils de pliage (6) pouvant être coulissés entre le porte-outil (16) et un logement d'outil (5) réalisé dans une barre de presse (4, 7) de la presse plieuse (2) ;
un dispositif de manipulation (19) pour la manipulation du porte-outil (16) entre une position de changement d'outil (20), dans laquelle le porte-outil (16) est disposé à proximité du logement d'outil (5) afin de pouvoir faire coulisser les outils de pliage (6) du porte-outil (16) vers le logement d'outil (5), et une position d'équipement d'outil (21), dans laquelle le porte-outil (16) est disposé au niveau d'un magasin d'outils (15) pour l'équipement avec des outils de pliage (6),
**caractérisé en ce que**
le dispositif de manipulation (19) comprend un premier bras de manipulation (24) et un deuxième bras de manipulation (25), moyennant quoi, sur le premier bras de manipulation (24), est disposé un premier dispositif de couplage (26) pour le logement d'un premier porte-outil (16) et, sur le deuxième bras de manipulation (25), est disposé un deuxième dispositif de couplage (27) pour le logement d'un deuxième porte-outil (16).

2. Dispositif de changement d'outil selon la revendication 1, **caractérisé en ce que** les deux bras de manipulation (24, 25) comprennent chacun un réglage linéaire (28), au moyen desquels les deux dispositifs de couplage (27, 28) peuvent être coulissés indépendants entre eux dans la direction verticale (29).

3. Dispositif de changement d'outil selon la revendication 2, **caractérisé en ce qu'**au moins un des bras de manipulation (24, 25) comprend une unité de guidage (30), par exemple un chariot de guidage, sur laquelle le dispositif de couplage (26, 27) est disposé, l'unité de guidage (30) étant couplée avec un dispositif d'entraînement (31), plus particulièrement un vérin pneumatique.

4. Dispositif de changement d'outil selon la revendication 3, **caractérisé en ce qu'**au moins un autre dispositif d'entraînement (32), plus particulièrement un autre vérin pneumatique, est prévu, au moyen duquel le dispositif d'entraînement (31) du chariot de guidage (30) est coulissant, ce qui permet de réaliser une fonction télescopique.

5. Dispositif de changement d'outil selon l'une des revendications précédentes, **caractérisé en ce que** les deux bras de manipulation (24, 25) sont disposés chacun sur un logement de bras de manipulation (23), les logements de bras de manipulation (23) étant logés de manière rotative par rapport à un châssis de base (22) du dispositif de manipulation (19).

6. Dispositif de changement d'outil selon l'une des revendications précédentes, **caractérisé en ce que** les dispositifs de couplage (26, 27) comprennent chacun un premier élément d'actionnement (37) et un deuxième élément d'actionnement (38), qui peuvent être coulissés au moyen d'un premier actionneur (39) et d'un deuxième actionneur (40) dans la direction horizontale (12) entre une position de repos (43) et une position d'actionnement (44), le porte-outil (16) pouvant ainsi être libéré ou bloqué avec le dispositif de couplage (26).

7. Dispositif de changement d'outil selon la revendication 6, **caractérisé en ce que**, sur le porte-outil (16), sont disposés un premier élément de blocage (45) et un deuxième élément de blocage (46), qui comprennent chacun au moins un tenon de blocage (47) qui est logé dans l'élément d'arrêt (45, 46) de manière coulissante pour un emboîtement dans un logement de tenon (51) disposé dans la position de changement d'outil (20) ou dans la position d'équipement d'outil (21), les tenons de blocage (47) pouvant être coulissés au moyen des éléments d'actionnement (37, 38).

8. Dispositif de changement d'outil selon l'une des revendications 6 à 7, **caractérisé en ce que**, sur les tenons de blocage (47) est réalisé un tenon d'entraînement (52) qui est conçu de façon à s'étendre en direction des éléments d'actionnement (37, 38) et **en ce que**, dans les éléments d'actionnement (37, 38), est réalisé un évidement (53) correspondant au tenon d'entraînement (52).

9. Dispositif de changement d'outil selon l'une des revendications 6 à 8, **caractérisé en ce que**, dans l'élément d'actionnement (37, 38) est réalisé un évidement en forme de fente (55) qui comprend, dans une zone d'insertion (59), un élargissement (60) et **en ce que**, sur le porte-outil (16), est disposé un tenon de maintien (56) qui comprend une tête de fixation (57) avec un évidement en forme de rainure (58), une largeur (61) de l'évidement en forme de fente (55) dans l'élément d'actionnement (37, 38) étant légèrement plus grande que la dimension principale (62) du fond de la rainure de l'évidement en forme de rainure (58) et la largeur interne (63) de l'élargissement (60) étant légèrement plus grande qu'une dimension externe (64) de la tête de fixation (57) du tenon de maintien (56).

10. Dispositif de changement d'outil selon l'une des revendications précédentes, **caractérisé en ce que**, dans la cavité de logement (18) du porte-outil (16), est réalisé un crochet de sécurisation (66) qui est disposé sur le porte-outil (16) de manière pivotante autour d'un centre de rotation (67), le crochet de sécurisation (66) comprenant, au niveau d'un premier bras de levier (68), un embout de sécurisation (70) qui, dans une position de sécurisation (71), agit comme une butée mécanique et empêche ainsi le coulissement des outils de pliage (6) et, dans une position de libération (73), le crochet de sécurisation (66) étant enfoncé dans le porte-outil (16), de façon à ce que les outils de pliage (6) puissent être poussés latéralement hors du porte-outil (16), le crochet de sécurisation (66) étant comprimé au moyen d'un élément à ressort (72) dans une position de libération (73) et pouvant être comprimé dans la position de sécurisation (71) au moyen de l'élément d'actionnement (37, 38).

11. Dispositif de changement d'outil selon la revendication 10, **caractérisé en ce que**, sur un côté du centre de rotation (67) du crochet de sécurisation (66), est disposé le premier bras de levier (68) et **en ce que**, sur un deuxième côté du centre de rotation (67), est disposé un deuxième bras de levier (69), l'élément à ressort (72) étant conçu comme un ressort de compression qui agit sur un côté inférieur (74) du deuxième bras de levier (69) et le crochet de sécurisation (66) est ainsi comprimé dans sa position de libération (73) et **en ce que**, sur l'élément d'actionnement (37, 38), est réalisé un embout d'actionnement (75) qui agit sur le premier bras de levier (68) du crochet de sécurisation (66), moyennant quoi, dans la position d'actionnement (44) de l'élément d'actionnement (37, 38), le crochet de sécurisation (66) est comprimé dans sa position de libération (73) et, dans la position de repos (43) de l'élément d'actionnement (37, 38), le crochet de sécurisation (66) est comprimé dans sa position de sécurisation (71).

12. Installation d'usinage pour le pliage de tôles, cette installation de fabrication comprenant :
une presse plieuse (2) avec une barre de presse fixe (4) et une barre de presse (7) mobile par rapport à celle-ci, ainsi que des logements d'outils (5) réalisés sur les barres de presse (4, 7), pour le logement d'outils de pliage (6) ;
un dispositif de changement d'outil (14) pour le changement des outils de pliage (6),
**caractérisée en ce que**
le dispositif de changement d'outil (14) est conçu selon l'une des revendications précédentes.

13. Procédé de réalisation d'un changement d'outil sur une presse plieuse (2), plus particulièrement à l'aide d'un dispositif selon l'une des revendications précédentes, **caractérisé en ce que** le procédé comprend les étapes suivantes :
- mise à disposition d'un premier porte-outil (16), qui est conçu pour le logement d'outils de pliage (6), le premier porte-outil (16) étant logé sur un premier bras de manipulation (24) d'un dispositif de manipulation (19) ;
- équipement du premier porte-outil (16) avec des outils de pliage (6) logés dans le magasin d'outils (15) ;
- mise à disposition d'un deuxième porte-outil (16) à la position de changement d'outil (20), dans laquelle le porte-outil (16) est disposé près du logement d'outil ;
- coulissement des outils de pliage (6) logés dans un logement d'outil (5) de la presse plieuse (2) vers le deuxième porte-outil (16) ;
- logement du deuxième porte-outil (16) au moyen d'un deuxième bras de manipulation (25) du dispositif de manipulation (19) ;
- positionnement du premier porte-outil (16) dans la position de changement d'outil (20) au moyen du premier bras de manipulation (24) du dispositif de manipulation (19) ;
- dépôt du premier porte-outil (16) dans la position de changement d'outil (20) ;
- transport du deuxième porte-outil (16) vers une position d'équipement d'outil (21), dans laquelle le porte-outil (16) est disposé au niveau d'un magasin d'outils (15) pour l'équipement avec des outils de pliage (6).
